(19)

Europäisches Patentamt
European Patent Office
Office européen des brevets

(11) EP 4 576 013 A1

(12) EUROPEAN PATENT APPLICATION

(43) Date of publication:
25.06.2025 Bulletin 2025/26

(51) International Patent Classification (IPC):
G06V 10/82 (2022.01)    G06T 7/00 (2017.01)
G06T 7/11 (2017.01)    G06V 20/52 (2022.01)
G06V 20/69 (2022.01)    G06V 10/98 (2022.01)

(21) Application number: 23307266.9

(22) Date of filing: 19.12.2023

(52) Cooperative Patent Classification (CPC):
G06V 20/69; G06T 7/0004; G06T 7/11;
G06V 10/82; G06V 10/98; G06V 20/52

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• TotalEnergies OneTech
  92400 Courbevoie (FR)
• SAFT
  92300 Levallois-Perret (FR)

(72) Inventors:
• GUILLON, Sébastien
  64018 PAU CEDEX (FR)
• JOLIVET, Isabelle
  64018 PAU CEDEX (FR)
• DE LOUBENS, Romain
  64018 PAU (FR)
• DENOYELLE, Quentin
  92300 LEVALLOIS PERRET (FR)
• SHODIEV, Abbos
  92300 LEVALLOIS PERRET (FR)

(74) Representative: Plasseraud IP
  104 Rue de Richelieu
  CS92104
  75080 Paris Cedex 02 (FR)

(54) **3D IMAGES OF AN ELECTROCHEMICAL CELL UNIT CONSISTENT WITH MEASURED PHYSICAL PROPERTIES OF THE ELECTROCHEMICAL CELL UNIT**

(57)    The disclosure relates to a computer-implemented method comprising: obtaining, from a 3D imaging measurement, a 3D image of at least a portion of an electrochemical cell unit; using a trained supervised machine learning engine to associate, based on intensities of voxels of the 3D image, each of said voxels of the 3D image to labels representative of electrochemical cell unit components; calculating, from said segmented 3D image, values of one or more physical property of the electrochemical cell unit; obtaining one or more physical measurements of said one or more physical property; calculating one or more difference between said one or more physical measurements and said calculated values; if said one or more difference exceeds a threshold, modifying one or more of said 3D image and one or more parameter of the preceding steps.

FIG. 5

Processed by Luminess, 75001 PARIS (FR)

## Description

## Technical Field

This disclosure pertains to the field of image processing. More specifically, it relates to the processing of 3D images of electrochemical cell units to ensure that the images comply with the physical properties of the electrochemical cell units.

## Background Art

A microscale simulation refers to a computational modeling method employed to replicate and analyze dynamic processes, phenomena, or systems at an exceptionally localized level, typically within the micrometer to millimeter scale. This simulation technique involves the discrete representation of individual components, entities, or particles, and utilizes algorithms to simulate their interactions, behaviors, and movements over a defined period. The primary purpose of microscale simulation is to provide insights and predictions related to the behavior, performance, or characteristics of specific materials, devices, or processes at a highly granular level.

For example, microscale simulation can be applied to electrochemical cells such as for example batteries, in order to simulate various parameters of operation of electrochemical cells according to microscale models. To this effect, a microscale simulation can be fed with a microscale model of the electrochemical cell, for example in the form of an image of units of the electrochemical cell at the particle level. Such simulations may allow for example simulating the operation of the electrochemical cell very precisely. The microscale simulation of the electrochemical cells ultimately allows improving the designs of electrochemical cells, for example to increase the lifetime of the electrochemical cells, reduce their size and weight, increase their autonomy, etc.

For example, 3D images of the electrochemical cell units at a microscale level can be fed to the simulation, in order to simulate their behavior. However, the images that are fed to the electrochemical cell units are not raw images but processed 3D images, for example to segment the particles of material. Thus, the process of production of 3D images may produce images that are not always consistent with the physical properties of the electrochemical cell unit. This may reduce the reliability of the simulation.

In addition, in many cases, such images need to be, at least in part, artificially generated, for a plurality of reasons:

- 3D imaging is very costly. In order to produce a 3D image of a whole electrochemical cell unit, it is therefore more appropriate to perform 3D measurement of a small part of the electrochemical cell unit, then expand the image, rather than performing a 3D image of a whole electrochemical cell unit ;

- in many cases, it is desirable to simulate different types of electrochemical cell units having different physical properties, in order to simulate the characteristics of the whole battery using different types of electrochemical cell units. In order to increase the number of configurations to simulate, most of the 3D images can be generated artificially rather than captured on a previously manufactured electrochemical cell unit.

However, such images that are at least in part artificially generated may also represent electrochemical cell units whose physical properties are not consistent with the electrochemical cell unit that is intended to be simulated.

There is therefore a need for feeding microscale simulation of batteries with 3D images of electrochemical cell units that ensure that the images exhibit physical properties that are consistent with those of the electrochemical cell unit that is intended to be simulated.

There is more generally a need for processing microscopic images of electrochemical cell units, in order to ensure that the microscopic images represent a material that has the same physical properties than the electrochemical cell unit.

## Summary

This disclosure improves the situation.

It is proposed a computer-implemented method comprising: obtaining, from a 3D imaging measurement, a 3D image of at least a portion of an electrochemical cell unit, where the intensity of each voxel depends upon an electrochemical cell unit component that the voxel contains ; using a trained supervised machine learning engine to associate, based on intensities of voxels of the 3D image, each of said voxels of the 3D image to labels representative of electrochemical cell unit components, said labels comprising at least a label representative of material, and a label representative of pores ; segmenting said labelled 3D image into elementary particles of material ; calculating, from said segmented 3D image, values of one or more physical property of the electrochemical cell unit; obtaining one or more physical measurements of said one or more physical property of the electrochemical cell unit ; calculating one or more difference between said one or more physical measurements and said calculated values of said one or more physical property; if said one or more difference exceeds a threshold, modifying one or more of said 3D image and one or more parameter of the preceding steps.

By "electrochemical cell", we designate a device that is able to generate electrical energy from chemical reactions, such as for example redox (reduction-oxidation) reactions. An electrochemical cell may be for example a secondary electrochemical cell of Lithium-ion type such as a Lithium-ion battery. Alternatively, the electrochemical cell may be a primary cell.

By "electrochemical cell unit", we designate a unit, or a part, of an electrochemical cell. For example, if the electrochemical cell is a battery, an electrochemical cell unit may be an electrode, a separator or a membrane of the battery.

By "electrochemical cell unit component", we designate a material, or pores that constitutes a part of the electrochemical cell unit. For example, electrochemical cell components may be positive and negative electrode components, separator components, protection layer components, solid electrolyte membrane components, etc.. Positive and negative electrode components may for example be active materials, Carbon-Binder Domains, and pores, metallic lithium deposit, and Solid electrolyte interphase.

By "material", we designate material that form the electrochemical cell unit.

In a number of embodiments, the material may be active material.

By "active material", we designate material that participate in the electrochemical charge/discharge reaction of the electrochemical cell unit. For example, active material may be lithium hosting materials that contribute to the electrochemical processes necessary for energy storage in the electrochemical cell unit. Active material may for example comprise one or more of natural or synthetic graphite, lamellar oxides (e.g., NCA and NMC) and phosphate-based materials (e.g., LFP and LMFP). In the context of an electrochemical cell having liquid electrolyte, active material may for example be material capable of reacting according to an oxidation-reduction reaction, whereby producing electrons at the origin of the electric current and producing ions which will flow from one electrode to the other via an electrolyte.

The material may also be non active material. For example, polyethylene is a non active material that can form separators.

In the context of an electrochemical cell unit, a "pore", or "void" refers to a space within the structure of the electrochemical cell unit material. Pores can take various forms, such as cracks, or spaces between particles. The pores may come from different sources, either between particles of material (intergranular pores), or inside particles (intragranular pores). These pores can be natural features of the material or may result from the manufacturing process Pores can be either empty or filled with liquid. For example, in batteries having a liquid electrolyte, . most of the pores are supposed to be filled by the liquid electrolyte at the end of the filling process. Therefore the presence of pores affects the ease with which ions can move within the electrochemical cell unit.

In the context of an electrochemical cell unit, a "Carbon Binder Domain" (abbreviated CBD) refers to a specific region or component within the electrochemical cell unit structure that consists of carbon additives bonded together by a binder material. The binder material may be a polymer mixture like carboxy-methyl cellulose and styrene butadiene rubber (CMC/SBR), or polyvinylidene fluoride (PVDF). Examples of carbon additives are given by carbon black particles and carbon nanotubes.

The steps of the method allow obtaining, for each voxel of the 3D image, a label defining which electrochemical cell unit component is present in the voxel.

The labelling is very accurate due to the use of a supervised machine learning engine.

It is therefore possible to calculate physical properties of the electrochemical cell unit based upon the precise spatial distribution of the materials within the electrochemical cell unit.

The steps of the method therefore allow a precise calculation of the physical properties of an electrochemical cell unit.

The method further allows obtaining a segmentation of the particles of the electrochemical cell unit that allows determining the granular microstructure of the electrochemical cell unit.

The detection of the difference allows detecting if the calculated parameters comply with physical measurements of the same parameter, and therefore ensure that the segmented 3D image accurately represents the electrochemical cell unit.

If it is not the case, the subsequent steps allow to modify or replace the 3D image in order to comply with the measured physical properties.

The steps of the method therefore allow ensuring that the image of the electrochemical cell unit at the output of the method is representative of the measured physical properties.

The following features, can be optionally implemented, separately or in combination one with the others:

In a number of embodiments, using a trained supervised machine learning engine to associate, based on intensities of voxels of the 3D image, each of said voxels of the 3D image to said labels representative of electrochemical cell unit components comprises: using said trained supervised machine learning engine to associate, based on intensities of pixels of a plurality of 2D slices of the 3D image, each of said pixels of said plurality of 2D slices to said labels representative of electrochemical cell unit components; associating each of said labels representative of electrochemical cell unit components to the corresponding voxel of said 3D image to obtain a labelled 3D image.

By "associating each of said labels representative of electrochemical cell unit components to the corresponding voxel of said 3D image to obtain a labelled 3D image", we designate an assignment of each label associated to a pixel of a 2D image to the corresponding voxel of the 3D image.

Performing the labelling on 2D slices rather than on the 3D image as a whole reduces the complexity of the labelling, and thus the computing requirements for executing the method. Furthermore, the accuracy of the labelling remains good, and 2D labelling requires fewer labelled data to be trained.

In a number of embodiments, said one or more physical property is selected in a group comprising one or more of: a volumic fraction of each electrochemical cell unit component; a distribution of the sizes of particles of material; a distribution of the sizes of pores; a surface of contact between at least two electrochemical cell unit components; a tortuosity of the electrochemical cell unit, a pore network, a porosity gradient and a surface roughness.

Each of the physical properties in the group is a property of interest for the manufacturing of electrochemical cell units. The calculation of one or more of the properties of the group therefore allows determining quality metrics relative to the electrochemical cell units.

In a number of embodiments of the invention, said calculating, from said segmented 3D image, one or more physical property of the electrochemical cell unit comprises: calculating values of said one or more physical property of the electrochemical cell unit for a plurality of window sizes, and for a plurality of distinct windows of each size ; calculating a variance of the one or more properties for each window size ; determining the smallest window size for which the variance is below a predefined threshold ; calculating values of said one or more physical property of the electrochemical cell unit using a window of said determined smallest window size for which the variance is below a predefined threshold.

The calculation of the physical properties can be performed by windows. In general, the highest the window size, the more representative of the whole electrochemical cell unit is the window. Therefore, the variance generally decreases when the window size increases. However, increasing the size of the window leads to higher computation requirements. The additional method steps therefore allow using a window size as little as possible (and thus reducing the computational resources required by the computation), while ensuring that the variance of the measurements depending of the position of the window will be sufficiently low, which means that the physical property thus obtained is fairly representative of the whole electrochemical cell unit.

In a number of embodiments, the computer-implemented method further comprises an image cleaning step comprising one or more of: deleting artifacts in the segmented 3D image ; smoothing interfaces between voxels belonging to different labels ; fusing a plurality of particles ; and detecting an isolated particle, and: calculating the volume of the particle, and the distance between the particle and its nearest particle neighbor; deleting said isolated particle if at least one condition is fulfilled in a group of conditions comprising one or more of : the volume is below a predefined volume threshold, and the distance higher than a predefined distance threshold; otherwise, inserting between the isolated particle and its nearest particle neighbor a further particle whose diameter is equal to the distance between the isolated particle and its nearest particle neighbor.

By "isolated particle" we designate a particle which is connected to none of the other particles in the 3D image.

The image cleaning steps allow obtaining an image which is more physically realistic. For example, the deletion of isolated particle, or addition of a further particle between the isolated particle and its nearest neighbor, allows removing a physical incoherence, where an isolated particle would be alone.

The image cleaning step are especially useful if the 3D image is fed to a microscale simulator because the simulation can run on a physically realistic image.

In a number of embodiments of the invention, modifying one or more of said 3D image and one or more parameter of the preceding steps comprises performing one or more of: modifying parameters of data cleaning methods applied to the 3D image ; modifying parameters of segmenting said labelled 3D image into elementary particles of material; increasing a size of a window of the 3D image used for calculating said values of said one or more physical property ; acquiring a further 3D image at a location of the electrochemical cell unit different from the 3D image ; replacing said 3D image by an artificially generated image generated by a generative machine learning engine that exhibits values of said one or more physical property similar to the measurements.

The artificially generated image may be generated for example by a generative machine learning engine, stochastic geometry or based on Discrete Element Method (DEM).

These modifications allow modifying the conditions of calculation (either the input image and/or the parameters of calculation), in order to decrease the distance between the calculated and measured physical properties. The modifications therefore allow improving the compliance of the 3D image with the measured physical properties.

In a number of embodiments, the method further comprises feeding said segmented 3D image to a micro-scale simulator of a battery comprising the electrochemical cell unit.

The micro-scale simulator can be fed with images that are consistent with the measured physical properties of the electrochemical cell unit. The simulation can therefore be run with an increased confidence that it will be consistent with the physical behavior of the electrochemical cell unit.

In a number of embodiments, the method comprises, prior to feeding said segmented 3D image to the micro-scale simulator, using a generative machine learning engine to extend the size of said 3D image to a full size of the electrochemical cell unit based on the calculated values of said one or more physical properties.

By "generative machine learning engine", we designate a machine learning engine that is able to generate images from parameters, which are in the context of the invention 3D images of electrochemical cell units based on one or more physical properties of the electrochemical cell units. For example, a generative machine learning engine may be a Variational Auto Encoder (VAE).

The calculation of the physical properties, then extension of the 3D image by a generative machine learning engine based on the parameters allows obtaining, from the segmented 3D image which represents a small part of the electrochemical cell unit, a large 3D image that represents how a complete electrochemical cell unit having the same physical property in all the parts of the electrochemical cell unit may look like.

Therefore, a physically reliable representation of the whole electrochemical cell unit can be obtained from a 3D imaging of a small part of the electrochemical cell unit. This therefore reduces the need for conducting 3D imaging for obtaining a physically reliable 3D image of the electrochemical cell unit, and also reduces the need for conducting destructive measurements on the electrochemical cell unit.

In a number of embodiments of the invention, said segmented 3D image is associated with said calculated one or more physical properties to enrich a training database of a generative machine learning engine ; said computer-implemented method further comprises: training said generative machine learning engine using said training database to generate segmented 3D images of electrochemical cell units based on input values of said one or more physical properties ; feeding said segmented 3D images generated by the machine learning engine to a micro-scale simulator of a battery comprising the electrochemical cell unit

A generative machine learning engine can be trained by associations between segmented 3D images of electrochemical cell units, and the associated physical properties to generate new 3D images of electrochemical cell units from input values of physical properties.

It is therefore then possible to use the segmented images produced by the generative machine learning engine to simulate batteries comprising electrochemical cell units having certain physical properties without even requiring to produce such electrochemical cell units, or to extend the size of 3D images of portions of the electrochemical cell unit to the full size of the electrochemical cell unit.

In a number of embodiments, said supervised machine learning engine has been previously trained by: obtaining a 3D training image of at least a portion of an electrochemical cell unit, where the intensity of each voxel depends upon an electrochemical cell unit component that the voxel contains ; extracting a 2D training slice from said 3D training image ; displaying said 2D training slice ; receiving, through one or more man-machine interface, labels representative of electrochemical cell unit components associated to pixels of said 2D training slice ; segmenting said 2D training slice into a plurality of pixel tiles associated to received labels ; creating additional pixel tiles associated with additional labels by applying one or more geometrical transformations to said one or more segmented pixel tiles and the associated received labels ; enriching a training database with said segmented pixel tiles associated with the received labels, and said additional pixel tiles associated with the additional labels ; using said training database to train said supervised machine learning engine to associate, based on intensities of pixels of 2D training images, said pixels of 2D training images to labels representative of electrochemical cell unit components

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

In another aspect, it is proposed a computer-implemented method comprising: obtaining a 3D image of at least a portion of an electrochemical cell unit, where the intensity of each voxel depends upon an electrochemical cell unit component that the voxel contains ; extracting a 2D slice from said 3D image ; displaying said 2D slice ; receiving, through one or more man-machine interface, labels representative of electrochemical cell unit components associated to pixels of said 2D slice ; segmenting said 2D slice into a plurality of pixel tiles associated to received labels ; creating additional pixel tiles associated with additional labels by applying one or more geometrical transformations to said one or more segmented pixel tiles and the associated received labels ; enriching a training database with said segmented pixel tiles associated with the received labels, and said additional pixel tiles associated with the additional labels ; using said training database to train a supervised machine learning engine to associate, based on intensities of pixels of 2D images, said pixels of 2D images to labels representative of electrochemical cell unit components.

A Man-Machine Interface (MMI), also known as Human-Machine Interface (HMI), is a system or technology that allows humans to interact with and control machines or computer systems. It serves as a bridge between humans and machines, enabling effective communication and interaction. MMIs can take various forms, ranging from simple physical controls to highly sophisticated graphical user interfaces (GUIs) found in modern computer systems. Here are some common examples:

- Touchscreens: These are interactive displays that allow users to interact with a machine by directly touching the screen. They are common in smartphones, tablets, kiosks, and some industrial control systems.

- Keyboards and Mice: These are traditional input devices for computers. Keyboards allow users to input text and commands, while mice provide a way to navigate graphical interfaces.

- Voice Recognition: This technology enables users to control machines or systems through spoken commands. Virtual assistants like Siri, Google Assistant, and Amazon Alexa are examples of voice-based MMIs.

- Graphical User Interfaces (GUIs): GUIs are visual interfaces that use graphical elements like icons, buttons, windows, and menus to allow users to interact with software applications. They are found in operating systems, software applications, and many consumer electronic devices.

A supervised machine learning engine refers to a computational system or algorithmic framework designed for training and inference tasks in the domain of machine learning. It operates on the principle of supervised learning, wherein the model is trained on labeled input-output pairs to learn the underlying patterns and relationships within the data. The engine utilizes a variety of algorithms and optimization techniques to iteratively adjust its parameters, enabling it to make accurate predictions or classifications on unseen data. Supervised machine learning engines may encompass a wide number of different techniques such as for example artificial neural networks, random forests, Bayesian statistics, decision tree learning or support vector machines.

A geometrical transformation, also known as a geometric transformation, refers to a process in which the position, shape, or size of a geometric figure is changed while maintaining its essential properties.

There exist several types of geometrical transformations, including, translation, rotation, flipping.

The application of geometrical transformations to pixel tiles allows performing data augmentation to obtain, from a limited set of labelled data, a large training database.

The method therefore allows generating a large training database using limited input from an expert user.

Furthermore, a large training database can be obtained using a limited number of 3D images - in many cases a single 3D image is sufficient. 3D imaging being known to be costly, and often destructive, the steps of the method allow performing an effective training of a supervised machine learning engine to automatically identify from an image the components of an electrochemical cell unit, while requiring a limited amount of manual annotation and a limited cost.

The following features, can be optionally implemented, separately or in combination one with the others:

In a number of embodiments, said one or more geometrical transformations comprise one or more of flipping, rotating and rescaling.

The geometrical transformations of flipping, rotating and rescaling can be deterministically applied with different parameters, and possibly combined, to both the pixels and the associated labels. Therefore, an accurate data augmentation can be obtained, where each pixel of a modified tile is associated to the same received label of the corresponding pixel of the segmented tile. Furthermore, the transformations of flipping, rotating and rescaling preserve the representation of the electrochemical cell unit components in the slice.

In a number of embodiments of the invention, the 3D image can be acquired through a 3D microscopic imaging technique.

A 3D microscopic imaging technique is a method used in microscopy to capture detailed three-dimensional images of biological or non-biological samples at a microscopic scale. Traditional microscopy typically provides two-dimensional images, which only show a flat representation of the sample. In contrast, 3D imaging techniques allow to visualize the structure and features of a sample in three dimensions, providing a more comprehensive understanding of its shape, organization, and spatial relationships. Furthermore, the 3D microscopic imaging techniques allow visualizing the sample at a particle level.

There exist various techniques and technologies used for 3D microscopic imaging that can be used within the context of this disclosure, including:

- Nano-computed tomography ;

- Confocal Microscopy ;

- Serial Block-Face Scanning Electron Microscopy (SBF-SEM) ;

- X-ray Microtomography (Micro-CT) ;

- Focused Ion Beam-Scanning Electron Microscopy (FIB-SEM) ;

- Plasma FIB-SEM ;

- Time-Of-Flight Secondary Ion Mass Spectrometry (Tof-SIMS) ;

- Scanning Electron Microscopy (SEM) / Transmission Electron Microscopy (TEM) imaging

In a number of embodiments, said 3D image is one or more of a Nano-computed tomography image ; a Confocal Microscopy image; a Serial Block-Face Scanning Electron Microscopy (SBF-SEM) image; a X-ray Microtomography (Micro-CT) image; a Focused Ion Beam-Scanning Electron Microscopy (FIB-SEM) image; a Plasma FIB-SEM image; a Time-Of-Flight Secondary Ion Mass Spectrometry (Tof-SIMS) image; a Scanning Electron Microscopy (SEM) image ; a Transmission Electron Microscopy (TEM) image.

These 3D microscopic imaging can be coupled with additional measurements such as for example Scanning Auger Microscopy (SAM), X-ray Photoelectron Spectroscopy (XPS)

The invention is however not restricted to these examples, and the 3D image can be acquired by any 3D microscopic means.

In a number of embodiments, said supervised machine learning engine is a U-Net convolutive neural network.

A U-Net convolutive neural network is s a convolutional neural network (CNN) architecture introduced by Ronneberger, O., Fischer, P., & Brox, T. (2015). U-net: Convolutional networks for biomedical image segmentation. In Medical Image Computing and Computer-Assisted Intervention-MICCAI 2015: 18th International Conference, Munich, Germany, October 5-9, 2015, Proceedings, Part III 18 (pp. 234-241). Springer International Publishing. The U-Net architecture is characterized by its U-shaped structure, which resembles the letter "U." It's particularly well-suited for tasks where the input and output have a spatial correspondence.

In a number of embodiments of the invention, said method comprises, prior to obtaining the 3D image of said at least the portion of the electrochemical cell unit, a preliminary step of calculating a window size for obtaining 3D the image comprising: acquiring a greyscale 2D image of the electrochemical cell unit ; for each candidate window size of a plurality of candidate window sizes: calculating a mean gray value for a plurality of windows of the candidate window size at different locations of the 2D image ; calculating a variance of the mean gray values over the plurality of windows of the candidate window size ; selecting the smallest candidate window size having a variance below a variance threshold ; obtaining the 3D image of said at least the portion of the electrochemical cell unit is performed according to said selected candidate window size.

This allows the window size of the 3D imaging is as little as possible, in order to limit the cost of 3D imaging, while ensuring that the 3D image will be representative of the whole electrochemical cell unit.

**Brief Description of Drawings**

Other features, details and advantages will be shown in the following detailed description and on the figures, on which:

**Fig. 1**

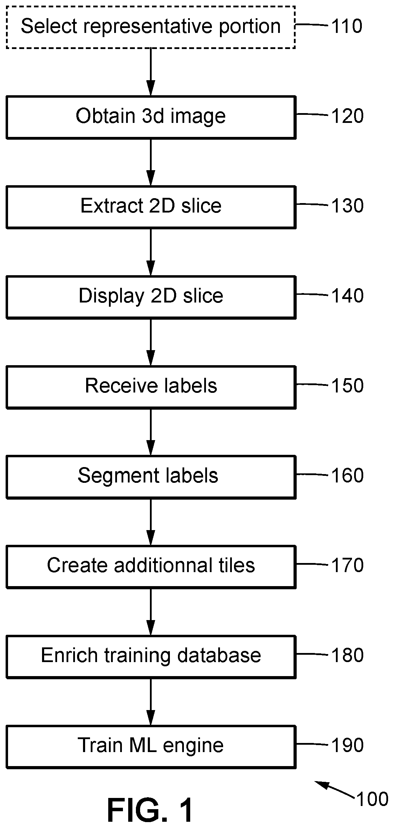

[Fig. 1] is an example of method to train a supervised machine learning engine according to an embodiment.

**Fig. 2**

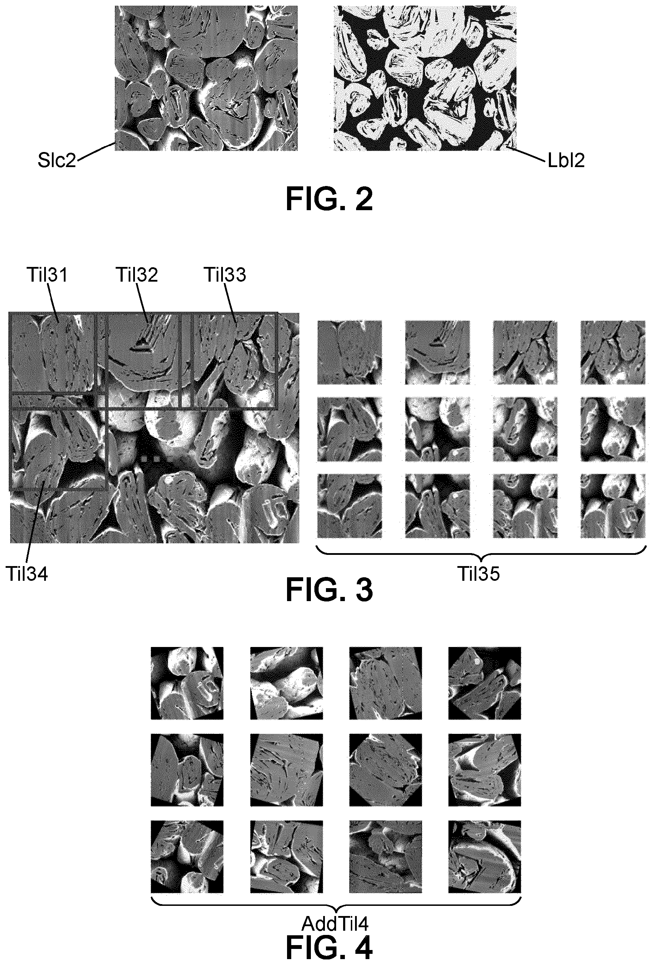

[Fig. 2] is an example of a display of a 2D slice and a reception of labels according to a number of embodiments.

**Fig. 3**
[Fig. 3] is an example of a segmentation of a 2D slice into pixel tiles according to a number of embodiments.

**Fig. 4**
[Fig. 4] is an example of additional pixel tiles obtained by the application of geometrical transformations to segmented pixel tiles according to a number of embodiments.

**Fig. 5**

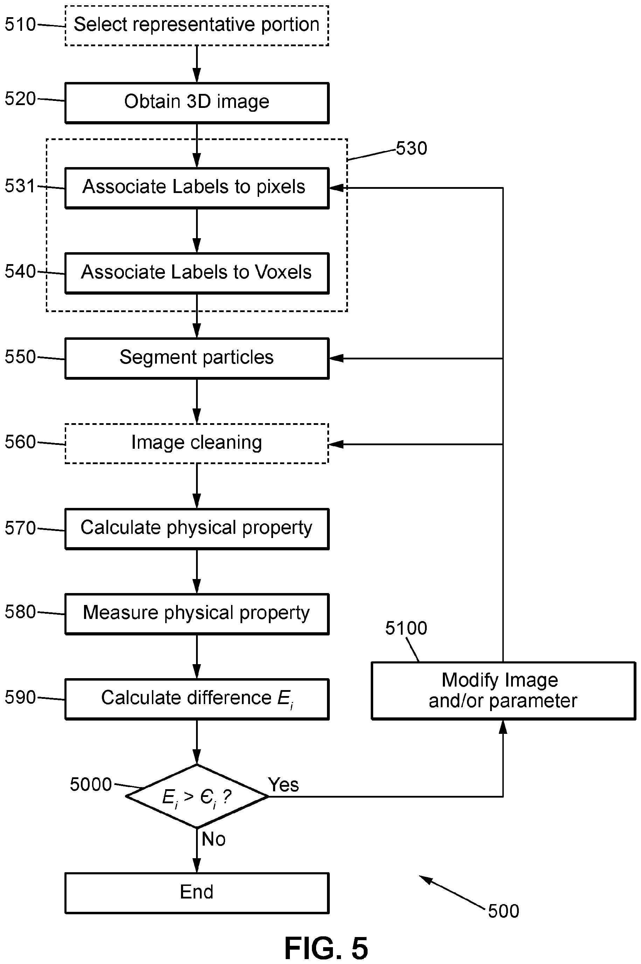

[Fig. 5] is an example of a computer-implemented method to prepare 3D images of electrochemical cell units for a micro-scale simulation of a battery according to a number of embodiments.

**Fig. 6**

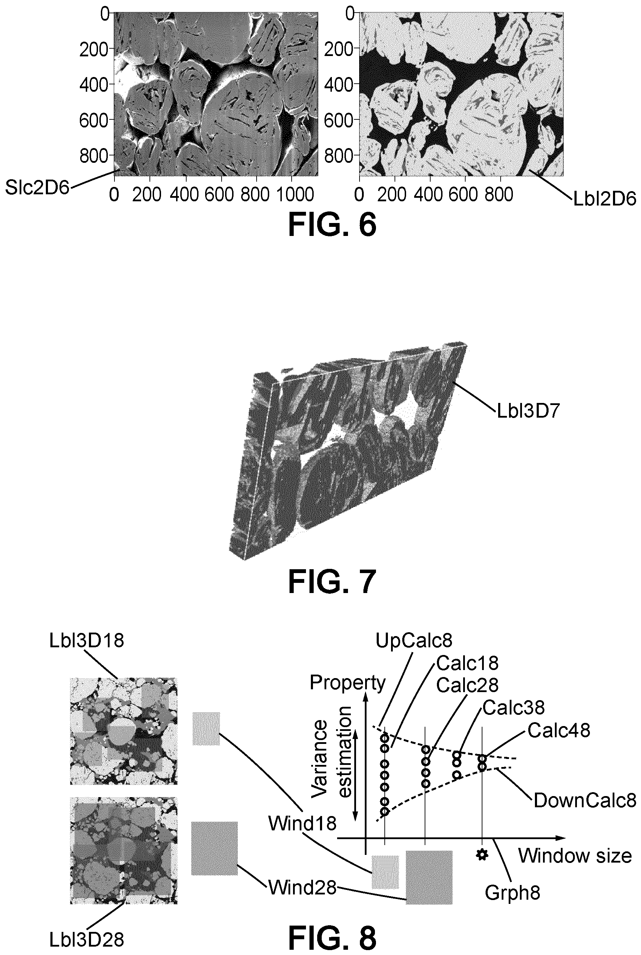

[Fig. 6] is an example of labelling of a 2D slice according to a number of embodiments.

**Fig. 7**
[Fig. 7] is an example of labelled 3D image according to a number of embodiments.

**Fig. 8**
[Fig. 8] is an example of variance of a calculation of a physical property of an electrochemical cell unit depending upon a window size used for the calculation of the physical property according to a number of embodiments.

**Fig. 9**

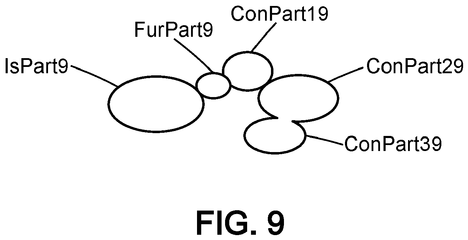

[Fig. 9] is an example of a detection of an isolated particle and the addition of a further particle to reconnect the isolated particle to its neighbors according to a number of embodiments.

**Fig. 10**

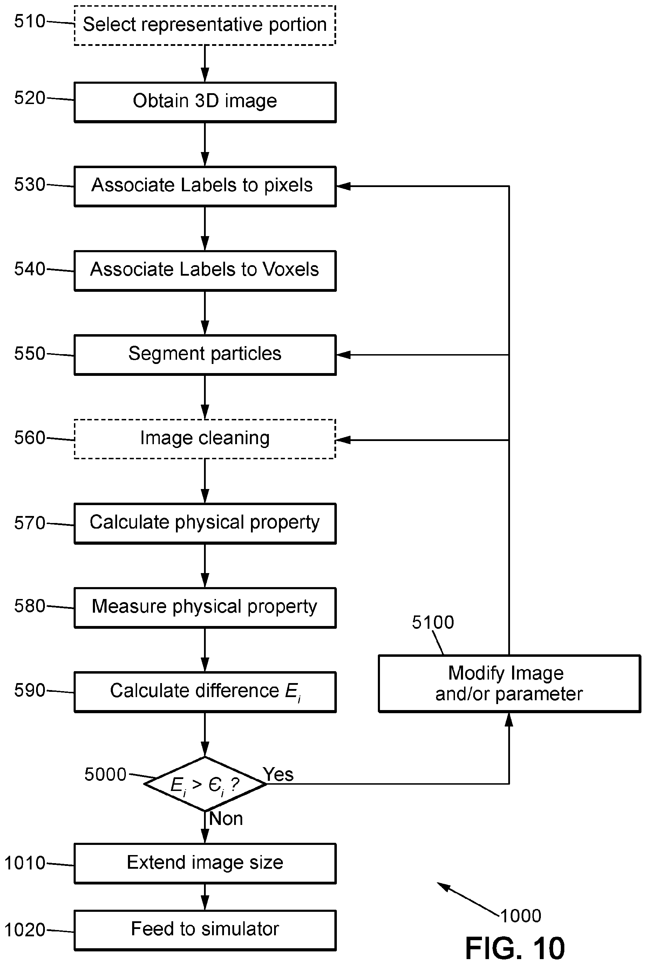

[Fig. 10] is an example of a method of simulation of an electrochemical cell unit according to a number of embodiments.

**Fig. 11**

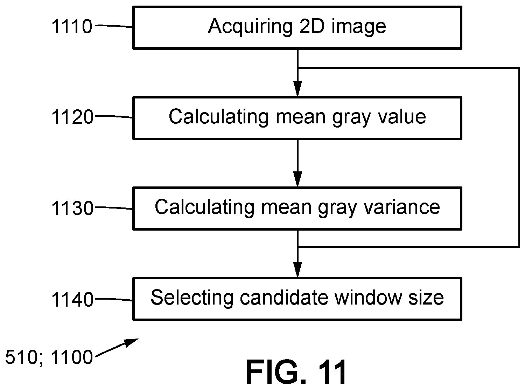

[Fig. 11] is an example of steps of calculating a window size for obtaining 3D images in a number of embodiments.

**Fig. 12**

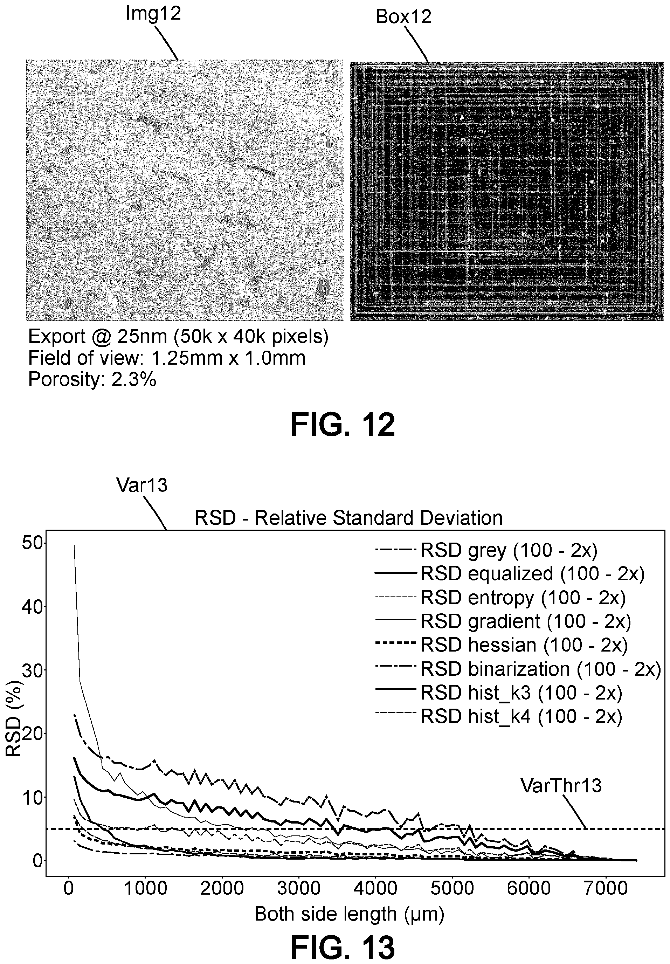

[Fig. 12] is an example of windows of a candidate window size in a number of embodiments.

**Fig. 13**
[Fig. 13] is an example of variances of mean gray values depending upon candidate window sizes in a number of embodiments;

[Fig. 14] is an example of an application of the invention to images of a separator of a battery cell.

## Description of Embodiments

In the examples, the invention will be illustrated by images (such as those of figures 2, 3, 4, 6, 7 or 14) where the electrochemical cell is a battery. It is now referred to figure 1.

The computer-implemented method 100 is an example of method to train a supervised machine learning engine according to an embodiment.

The computer-implemented method 100 is based on a 3D image of an electrochemical cell unit.

In number of embodiments of the invention, the computer-implemented method 100 comprises a preliminary optional step 110 of determining a representative window size for obtaining a 3D image. This step is described in greater details with reference to figure 11.

The method 100 further comprises a step 120 of obtaining a 3D image of at least a portion of an electrochemical cell unit, where the intensity of each voxel depends upon an electrochemical cell unit component that the voxel contains.

The 3D image may be a pre-existing image that is retrieved from a library, or an image that is acquired during the execution of the method 100.

The 3D image can be for example acquired, during the execution of the method 100 or previously, using a 3D microscopic imaging technique. The 3D image can be an image of the whole electrochemical cell unit, or an image of a portion of the electrochemical cell unit. When the 3D image is an image of a portion of the electrochemical cell unit, the portion may be either a representative portion of the electrochemical cell unit, a randomly selected portion of the electrochemical cell unit, or a portion selected based on specific criteria (such as for example a portion where the 3D image can be more easily acquired, a portion which is known to be representative, etc.). The size of the 3D image may for example be predefined, or determined at step 110.

The method 100 further comprises a step 130 of extracting a 2D slice from said 3D image. Such extraction may for example consist in creating a 2D slice whose pixels have values that correspond to the values of voxels in a plane of the 3D image.

The method 100 further comprises a step 140 of displaying the 2D slice. The step 140 may for example consist in displaying the 2D slice to a user using a display such as for example a screen.

The method 100 further comprises a step 150 of receiving, through one or more man-machine interface, labels representative of electrochemical cell unit components associated to pixels of said 2D slice.

The steps 140 and 150 may typically comprise displaying to a user the 2D slice on a display screen of a computing device, then receiving the labels from the user through one or more man-machine interface (for example a mouse and a keyboard) of the same computing device.

It is now referred to figure 2.

Figure 2 represents an example of a display of a 2D slice and a reception of labels according to a number of embodiments, that aims at illustrating the steps 140 and 150.

The 2D slice Slc2 is an example of a 2D slice that can be displayed to the user. As the voxels of the 3D image, the pixels of the 2D slice have different intensities that depend upon the electrochemical cell unit component that the pixel contains. For example, the darkest parts represent pores.

The labelled slice Lbl2 represents the 2D slice as labelled by the user: the user provides a label for each pixel. The labelling may be performed for example for each pixel separately, or for regions of pixels.

In the example of the labelled slice Lbl2:

- The light pixels represent active material ;

- The dark pixels represent pores.

In other examples, additional labels can be used for representing additional components. For example, the user may also label certain pixels as CBD, Solid-Electrolyte Interface (SEI), and/or deposit of metallic lithium.

Therefore, as shown in figure 2, at the output of step 150, an accurate label is provided by an expert user for each pixel of the 2D slice.

In some embodiments of the invention, the labels from the expert user can be expanded. For example, if a label representative of CBD is to be used, the CBD is difficult to identify from the 3D images. In such case, the expert user may provide only labels representative of active material and pores, and the labels representative of CBD may be deduced from the labels provided by the expert user. For example, the distribution of CBD can be reconstructed using a stochastic method from the distribution of pores and active material. In the specific case of graphite anodes, when binder material is present without carbon additives, it is usually present as a film at the surface of graphite. In such case, a surfacic distribution of binder (instead of a volumic distribution of CBD) may be reconstructed.

Coming back to figure 1, the method 100 comprises step 160 of segmenting said 2D slice into a plurality of pixel tiles associated to received labels.

This step thus allows extracting, from the 2D slice, a plurality of pixel tiles. As each pixel in the 2D slice is at this stage associated with a label, each pixel of each pixel tile can also be associated with the same label than in the 2D slice.

It is now referred to figure 3.

Figure 3 is an example of a segmentation of a 2D slice into pixel tiles according to a number of embodiments.

In the example of figure 3, a 2D slice Slc3 is segmented into a plurality of pixel tiles, for example pixel tiles Til31, Til32, Til33,Til34, etc. As shown in figure 3, the pixel tiles can be rectangles or squares of pixels that represent a portion of the 2D slice. According to various embodiments of the invention the pixel tiles may be of the same or different shape and sizes, may overlap or not. The plurality of pixel tiles may cover or not the whole 2D slice.

The plurality of tiles Til35 shows an example of a plurality of tiles at the output of step 160. As shown in figure 3, at this stage a large number of different tiles are thus obtained, each pixel of each tile being associated with a label representative of an electrochemical cell unit component provided by an expert user.

The method 100 further comprises a step 170 of creating additional pixel tiles associated with additional labels by applying one or more geometrical transformations to said one or more segmented pixel tiles and the associated received labels.

Thus, the same transformations can be applied to the pixel tiles, and the corresponding labels. Thus, at the output of each transformation, a new pixel tile is created, and is associated with the labels corresponding to the initial pixels. For example, if a rotation of 90° is applied to a pixel tile, a same rotation of 90° can be applied to the corresponding labels. Therefore, a new pixel tile is created, which benefits from the labels defined by the expert user.

Different transformations can be applied, possibly with a large number of different parameters.

For example, one or more geometrical transformations comprise one or more of flipping, rotating and rescaling.

Each of these transformations can be applied with different parameters (for example different rotation angles for rotating, different rescale factors, horizontal or vertical flipping, etc.).

The transformation can be applied alone, or combined. For example, an additional tile can be created by combining flipping and rotating, or rotating and rescaling. The same or different geometrical transformations can be applied to each of the tiles generated by the segmentation 160.

The geometrical transformations can be parameter in many different ways. For example, all possible combinations of rotating at a plurality of different angles (for example every 10°), rescaling by different rescaling factors, and horizontal and/or vertical flipping may be applied.

It is possible that, upon certain transformations, or combination of transformations, a pixel in an additional pixel tile does not correspond exactly to one pixel in a segmented pixel tile. For example, a rotation of 10° will not produce an exact matching between the pixels from the segmented and the additional pixel tiles, a pixel in the additional pixel tile will correspond to parts of a plurality of pixels of the segmented tile. In such case, the pixels and labels of the additional pixel tiles can be defined in different ways:

- the value of intensity of a pixel of the additional pixel tile may be obtained through different combinations of the values of intensities of the corresponding pixels in the segmented pixel tile. For example, it may be a weighted average of the values of intensities of the corresponding pixels in the segmented pixel tiles ;

- the label of the pixel of the additional pixel tile may be obtained as a function of the labels of the corresponding pixels in the segmented pixel tile. For example, if the labels of the corresponding pixels in the segmented pixel tile are different, the label that is the most represented may be selected.

It is thus apparent that the vast combination of possible geometrical transformations allow generating a large number of additional tiles, while benefiting from the annotation of pixels provided by the expert user for each additional tile.

It is now referred to figure 4.

Figure 4 is an example of additional pixel tiles obtained by the application of geometrical transformations to segmented pixel tiles according to a number of embodiments.

The additional tiles AddTil4 represent additional tiles obtained at step 170 by rotating segmented pixel tiles. This example show that additional tiles are obtained, with angles of rotation that are not present in the segmented tiles. Meanwhile, the content of the tiles is similar to the content of the segmented tiles, so that the labels of the segmented tiles can be also rotated and associated with the additional tiles.

The example of figure 4 is provided by means of example only of geometrical transformations applied to pixel tiles. As already discussed, other transformations, such as for example flipping or rescaling, may be applied, in place of or in combination with rotation.

Coming back to figure 1, the method 100 comprises a step 180 of enriching a training database with said segmented pixel tiles associated with the received labels and said additional pixel tiles associated with the additional labels.

Thus, the training database is a database that contains pixel tiles, or more generally 2D images obtained by slicing 3D microscopic images of electrochemical cell units, and labels that consist, for each pixel, of defining an electrochemical cell unit component that is represented by the pixel.

As already explained, the creation of additional pixel tiles and additional labels at step 170 allows widely increasing the size of the training database with accurate annotations using a limited amount of user input, and limited number of 3D imaging.

Some of the steps of the method may be repeated in order to further increase the size of the database. For example:

- steps 120 to 180 can be repeated for additional 3D images ;

- steps 130 to 180 can be repeated for additional 2D slices of a same 3D image ;

- steps 160 to 180 can be repeated for a plurality of different segmentation patterns of a same 2D slice ;

- etc.

The method 100 further comprises a step 190 of using said training database to train a supervised machine learning engine to associate, based on intensities of pixels of 2D images, said pixels of 2D images to labels representative of electrochemical cell unit components.

Stated otherwise, the supervised machine learning engine is a supervised machine learning engine that takes as input a 2D image and associates to each pixel of the 2D image a label representative of the electrochemical cell unit component that is represented by the pixel.

The supervised machine learning engine can thus be trained using the training database enriched at step 180.

The training of the machine learning engine may comprise any training step that is adapted to the machine learning engine. It may for example comprise an initialization of a model, and a plurality of training iterations, each iteration comprising a forward pass, the calculation of a loss of the model, and a backpropagation.

Any machine learning engine that is able to take as input pixel intensities to generate labels of the pixels may be used within the invention.

The invention is therefore not restricted to a particular machine learning engine. For example, the machine learning engine may be a neural network, notably a convolutive neural network, for example a U-Net convolutive neural network. It is however not restricted to this example, the machine learning engine may also belong to other kind of machine learning, for example a random forest.

The method 100 is provided by means of non-limitative example only of a method to train a supervised machine learning engine in a number of embodiments of the invention. Other methods may be used. For example, the training may be based only on the annotations that are performed by one or more expert user, without using geometrical transformations to further expand the training database.

In addition, the figure 1 relates to the training of a supervised machine learning that associates pixels of 2D slices to labels representative of electrochemical cell components. However, the invention is not restricted to supervised machine learning that operate on 2D slices. For example, the machine learning may be a 3D labelling machine learning engine that takes as input a 3D image and provides as output a label for each of the voxels of the 3D image. In such case, the training of the machine learning engine is performed using a training database of 3D images whose voxels are labelled.

It is now referred to figure 5.

The method 500 is a computer-implemented method used to prepare 3D images of electrochemical cell units for a micro-scale simulation of a battery according to a number of embodiments.

The computer-implemented method 500 is based on a 3D image of an electrochemical cell unit.

In number of embodiments of the invention, the computer-implemented method 500 comprises a preliminary optional step 510 of determining a representative window size for obtaining a 3D image. This step, similar to the step 110 of method 100, is described in greater details with reference to figure 11.

The method 500 further comprises a step 520 of obtaining a 3D image of at least a portion of an electrochemical cell unit, where the intensity of each voxel depends upon an electrochemical cell unit component that the voxel contains. This step is similar to the step 120 of method 100. As in the step 120, in step 520 the 3D image may be for example retrieved from a library, or acquired during the execution of the method 500. When the 3D image is an image of a portion of the electrochemical cell unit, the portion may be either a representative portion of the electrochemical cell unit, a randomly selected portion of the electrochemical cell unit, or a portion selected based on specific criteria (such as for example a portion where the 3D image can be more easily acquired, a portion which is known to be representative, etc.). The size of the 3D image may for example be predefined, or determined at step 510.

The 3D image comprises a plurality of 2D slices. The 3D image may for example be acquired in the form of a series of 2D slice, or divided into 2D slices.

The method 500 further comprises a step 530 of using a trained supervised machine learning engine to associate, based on intensities of voxels of the 3D image, each of said voxels of the 3D image to labels representative of electrochemical cell unit components, said labels comprising at least a label representative of material, and a label representative of pores..

As already discussed in figure 1, the labels may comprise, in addition to labels representative of active material and pores, additional labels, such as for example a label representative of CBD, Solid-Electrolyte Interface (SEI), and/or deposit of metallic lithium.

The step 530 can be performed in different ways. For example, the trained supervised machine learning engine may take as input the 3D image to provide a label for each voxel of the 3D image. Thus, the trained supervised machine learning engine is a 3D labelling machine learning engine that uses knowledge of the whole 3D image to perform the labelling. This ensures that the labelling is as accurate as possible.

Alternatively, the trained supervised machine learning can be a 2D labelling engine. Thus, the pixels of each 2D slice of the image are labelled independently of the pixels of the other 2D slices, then the labels of the pixels of the 2D slices are allocated to the corresponding voxels of the 3D image. The step 530 thus comprises, when a 2D labelling engine is used, a step 531 of labelling the pixels of 2D slices of the 3D image, then a step 540 of associating the labels to the voxels of the 3D image. Using a 2D labelling engine on 2D slices rather than a 3D labelling engine on the whole 3D image reduces the computing needs of the labelling, and allows training the labelling engine with a smaller training database. Meanwhile, the accuracy of the labelling remains satisfactory in most cases.

The step 531 consists in using the trained supervised machine learning engine to associate, based on intensities of pixels of a plurality of 2D slices of the 3D image, each of said pixels of said plurality of 2D slices to said labels representative of electrochemical cell unit components.

Thus, the supervised machine learning engine defines labels for each 2D slice independently from the other slices.

The trained supervised machine learning engine may be the supervised machine learning engine discussed with reference to figure 1. However, as mentioned in figure 1, other training methods may be used. For example, the supervised machine learning engine may have been trained by methods other than the method of figure 1. For example, it may be trained using annotations from an expert user, without the application of geometrical transformations to pixel tiles.

As discussed with reference to figure 1, the trained supervised machine learning engine may be any supervised machine learning that is able to associate labels to each pixel. For example, the supervised machine learning engine may be a neural network, for example a U-net.

The step 540 consists in associating each of said labels representative of electrochemical cell unit components to the corresponding voxel of said 3D image to obtain a labelled 3D image.

In substance, this step 540 allows obtaining a labelled 3D image, where each voxel is associated with a label defining to which component the voxel belongs to. The association at step 540 can be performed in different ways. For example, the values of labels can be copied directly from 2D to 3D images. In other embodiments, the 2D slices are simply a part of the 3D image, so that the association at step 540 is performed automatically for each pixel/voxel when the values of labels are determined at step 530.

At the output of 530, is thus obtained a 3D image comprising for each voxel a label indicating to which component the voxel belongs.

It is now referred to figures 6 and 7.

Figure 6 is an example of labelling of a 2D slice according to a number of embodiments, and figure 7 is an example of labelled 3D image according to a number of embodiments.

The slice Slc2D6 is a 2D slice of the 3D image obtained at step 520, and the labelled 2D slice Lbl2D6 is a labelled 2D slice obtained at step 530. The representation is similar to the representation in figure 2 in the training phase.

The figure 6 therefore shows a concrete example of labelling in the inference phase.

In figure 7, the labelled 3D image Lbl3D7 is obtained at step 540 by associating labels of a plurality of 2D slices such as the 2D slice Lbl2D6. The figure 7 therefore represents a concrete example of a labelled 3D image, where the labels are associated to each voxel. It can be seen in particular that the particles of active material appear in such a labelled 3D image.

Coming back to figure 5, the method 500 further comprises a step 550 of segmenting said labelled 3D image into elementary particles of active material.

The step 550 thus allows segmenting a 3D image such as the image Lbl3D7 into a plurality of elementary particles, where the position and shape of elementary particles is ultimately known. For example, in the input of the step 550, the voxels have labels representative of electrochemical cell unit components (e.g "material", "active material", "pores", "CBD", etc.), while, at the output of the step 550, the voxels that belong to a particle have labels representative of a given particle they belong to (e.g "Particle 1", "Particle 2", "Particle 3", etc). Thus, the step 550 allows identifying elementary particles out of a description of the components.

The segmentation can be performed, from the labelled 3D images, in different ways. For example, watershed type methods can be used.

The method 500 further comprises an optional step of image cleaning 560.

The step 560 of image cleaning aims at modifying the 3D image, in order that it is more physically realistic. The step 560 is for example helpful if the 3D image is fed to a microscale simulator, because the 3D image will be more physically realistic for the simulation.

The step 560 is represented in the figure 5 between the step 550 of particle segmentation, and the step 570 of calculating physical properties, so that the one or more physical property is calculated in the cleaned image. This representation if however not limitative, and, in embodiments where the step 560 is executed, it may be for example executed at a later stage of the method, so that the one or more physical property is calculated on the 3D image before cleaning.

The image cleaning may comprise one or more of the data cleaning steps listed below.

Artifacts can be deleted from the segmented 3D image. For example, artifacts on particles of active material may be deleted.

The interfaces between voxels belonging to different labels can be smoothed. For example, the surfaces between voxels belonging to labels of active material and pores may be smoothed, in order to represent a smooth surface between particles of active material and pores.

A plurality of particles can be fused. For example, the smallest particles can be fused with adjacent larger particles. The fusion of particles can be implemented in different ways. For example, a user may select particles to fuse using a Man Machine Interface. The particles may also be fused automatically based on criteria sizes and distances for example.

Isolated particles can also be detected and deleted or reconnected to neighboring particles by the insertion of a further particle.

The step 560 therefore allows ensuring that the 3D image is physically realistic. The step 560 is for example useful if the 3D image is fed to a microscale simulator, because the simulator will operate on physically realistic images.

It is now referred to figure 9.

Figure 9 is an example of a detection of an isolated particle and the addition of a further particle to reconnect the isolated particle to its neighbors according to a number of embodiments.

As mentioned above, one of the possible image cleaning steps consist in detecting isolated particles, and either deleting them or reconnecting them to neighboring particles by the insertion of a further particle.

In the example of figure 9, an isolated particle (i.e a particle that is connected to no other particle) IsPart9 is detected. Neighboring connected particles ConPart19, ConPart29 and ConPart39 are also detected. This situation is not physically realistic, because it would mean that particle IsPart9 is free floating.

The particle IsPart9 can in this example be deleted is:

- the volume of the particle IsPart9 is below a predefined volume threshold, and /or

- the distance between the particle IsPart9 and its nearest neighbor is higher than a predefined distance threshold.

The volume threshold and/or the distance threshold may be obtained in different ways, and for example defined by an expert user.

Stated otherwise, an isolated particle can be deleted from the image if it is too small and/or too far from the other particles.

In the present case, the isolated particle IsPart9 is both large, and close to the nearest neighbor ConPart19. Therefore, instead of deleting the particle IsPart9, a further particle FurPart9 is inserted between IsPart9 and ConPart19. The diameter of FurPart9 is equal to the distance between the isolated particle and its nearest particle neighbor.

Therefore, a physically realistic connection between the particles is ensured in the image, and a further particle is inserted only if it has a limited impact in the image.

In cases where large particles are isolated and far from neighboring particles, an alarm can be raised to a user, because it would not be satisfactory to insert a large further particle or to delete a large isolated particle. In such case the image could be rejected, and the whole method can be restarted with a new image.

The method 500 further comprises a step 570 of calculating, from said segmented 3D image, values of one or more physical property of the electrochemical cell unit.

The step 570 therefore comprises analyzing the 3D image to calculate one or more physical property of the electrochemical cell unit.

The one or more properties that are calculated may be different properties, such as:

- a volumic fraction of each electrochemical cell unit component (for example, the volumic fraction of active material, of pores, etc.) ;

- a distribution of the sizes of particles of active material (for example, the distribution of the number of particles of active material depending upon the size of the particles) ;

- a distribution of the sizes of pores (also called voids) (for example, the distribution of the number of pores depending upon the size of the pores) ;

- a surface of contact between at least two electrochemical cell unit components (for example, the surface of contact between pores and active material) ;

- a tortuosity of the electrochemical cell unit.

Some properties may be calculated by 3D image analysis. For example, the:

- the volumic fraction of an electrochemical cell unit component can be calculated by dividing the number of voxels labelled as the electrochemical cell unit component by the total number of voxels of the 3D image ;

- the distribution of the sizes of particles of active material can be calculated by calculating the volume of each particle, converting the volume into a radius of equivalent sphere, and calculating the distribution of the number of particles by size ;

- the distribution of the sizes of pores can be calculated by different means, for example one of those listed in Münch, B., & Holzer, L. (2008). Contradicting geometrical concepts in pore size analysis attained with electron microscopy and mercury intrusion. Journal of the American Ceramic Society, 91(12), 4059-4067;

- the surface of contact between two electrochemical cell unit components can be calculated by summing the sizes of all the surfaces of contact between voxels that belong to the two components. When a CBD component is present, the surface of contact between active material and CBD can be calculated as a predefined fraction of the total surface between voxels of active material and voxels of CBD, the fraction being chosen, for example to be equal to the mesoporosity of the CBD component, which is generally known.

These physical properties are provided by means of non-limitative examples of physical properties that may be used within the invention. According to various embodiments of the invention, one or a plurality of such properties may be calculated. Any combination of one or more of the above mentioned properties may be used.

The tortuosity can encompass different types of tortuosity, and can be calculated accordingly in different ways.

The geometric tortuosity intuitively corresponds to the minimum path length to cross the electrochemical cell unit in a chosen direction, via a liquid component (electrolyte) filled in the pores for the ions or via a solid component for the electrons. Geometric tortuosity can be calculated by minimizing the Euclidean distance associated with the different possible paths, for example using the A-star algorithm or the Eikonal equation.

A tortuosity of ionic diffusion of type I is associated with a particular process of diffusion of ions in the electrolyte, called "passive diffusion", and can be calculated by solving a Laplace equation on the ionic concentration, with conditions zero flow at the interfaces between the electrolyte and a solid phase of the electrochemical cell unit. The tortuosity of ionic diffusion of type I can be physically measured by a method called "polarization-interrupt" (or "restricted diffusion").

A tortuosity of ionic diffusion of type II is associated with a diffusion process of the ions of the electrolyte interacting with a solid phase via electric double layer effects. It can be calculated by solving a Laplace equation on the electric potential, with capacitance (or pseudo-capacitance) conditions at the liquid-solid interfaces. The tortuosity of ionic diffusion of type II can be measured experimentally using an impedance method on symmetric cells ("Electrical Impedance Spectroscopy on Symmetric cells").

The tortuosity can more generally be calculated for examples by the methods disclosed by

- Cooper, S. J., Bertei, A., Shearing, P. R., Kilner, J. A., & Brandon, N. P. (2016). TauFactor: An open-source application for calculating tortuosity factors from tomographic data. SoftwareX, 5, 203-210. ,

- Nguyen, T. T., Demortière, A., Fleutot, B., Delobel, B., Delacourt, C., & Cooper, S. J. (2020). The electrochemical cell unit tortuosity factor: why the conventional tortuosity factor is not well suited for quantifying transport in porous Li-ion battery electrochemical cell units and what to use instead. npj Computational Materials, 6(1), 123 and

- Shodiev, A., Primo, E. N., Chouchane, M., Lombardo, T., Ngandjong, A. C., Rucci, A., & Franco, A. A. (2020). 4D-resolved physical model for Electrochemical Impedance Spectroscopy of Li (Ni1-x-yMnx-Coy) O2-based cathodes in symmetric cells: Consequences in tortuosity calculations. Journal of Power Sources, 454, 227871.

It is now referred to figure 8.

Figure 8 is an example of variance of a calculation of a physical property of an electrochemical cell unit depending upon a window size used for the calculation of the physical property.

In a number of embodiments of the invention, the one or more property can be calculated in a window of the 3D image. The value of the physical property that is calculated can thus be slightly different depending upon the position of the pixel window where the property is calculated.

The figure 8 show two examples of window sizes Win18 and Win28.

The vignette Lbl3D18 show 5 different positions of a window of the size Win18 in a 3D image. The calculated value of the physical property will thus be slightly different between the 5 positions.

The vignette Lbl3D28 show 4 different positions of a window of the size Win18 in a 3D image. The calculated value of the physical property will thus be slightly different between the 4 positions.

The graph Grph8 represents an example of evolution of the variance of the calculated values of a physical property depending upon the size of the pixel window. The horizontal axis represents the window size, and the vertical axis the value of the properties. The dots Calc18, Calc28, Calc38 and Calc48 represent respectively calculated values of the physical properties for the window sizes Win18, Win28, and two larger window sizes.

The two dashed lines Upcalc8 and DownCalc8 represent respectively the upper bound and lower bound of the calculated values depending upon the size of the pixel window. The difference between the lines Upcalc8 and DownCalc8 thus represents an estimation of the variance of the calculated values of the physical property depending upon the size of the pixel window.

The figure 8 therefore shows that the variance of the calculated values decreases when the size of the pixel window increases. However, increasing the size of the pixel window renders the calculation more complex. It is therefore desirable to use a window size that represents a good tradeof between a limited variance of the calculated values of a physical property, in order to ensure that the calculated value will be sufficiently reliable, and a limited complexity of calculation of the property.

The calculation of the one or more physical property of the electrochemical cell unit can therefore comprise:

- calculating values of said one or more physical property of the electrochemical cell unit for a plurality of window sizes, and for a plurality of distinct windows of each size. For example, the one or more property can be calculated for different positions of a pixel window of size Win18, and of size Win28 ;

- calculating a variance of the one or more properties for each window size. For example, a variance of the calculated values of the one or more properties can be calculated for the size Win18, the size Win28, and optionally a plurality of other sizes ;

- determining the smallest window size for which the variance is below a predefined threshold. For example, a predefined threshold may represent a maximal acceptable variance. Such a threshold may for example be input by a user, or determined experimentally ;

- calculating values of said one or more physical property of the electrochemical cell unit using a window of said determined smallest window size for which the variance is below a predefined threshold. For example, if the variance associated with the size Wind18 is below the predefined threshold, but the variance associated with the size Wind28 is below the threshold, the one or more physical property can be calculated using a pixel window of size Wind28.

Calculating values of said one or more physical property of the electrochemical cell unit using a window of said determined smallest window size for which the variance is below a predefined threshold allows ensuring that the computation will be the least complex (provided that the window size is the smallest possible) while ensuring that the variance of the calculated values is below the predetermined threshold, which means that the calculated values will meet the desired precision requirements.

Coming back to figure 5, the method 500 further comprises a step 580 of obtaining one or more physical measurements of said one or more physical property of the electrochemical cell unit.

The one or more physical measurements is dependent upon the one or more physical property that is used.

For example:

- a volumic fraction of each electrochemical cell unit component can be physically measured by measuring the mass density by material, the mass fractions of electrochemical cell unit components, the coating weight and coating thickness. ;

- a distribution of the sizes of particles of active material can be physically measured by performing a laser granulometry on powder of active material used for manufacturing the electrochemical cell unit ;

- a distribution of the sizes of pores can be physically measured by Mercury Injection Capillary Pressure (MICP) or Nuclear Magnetic Resonance (NMR) cryoporometry ;

- a surface of contact between at least two electrochemical cell unit components belonging to a solid phase and void (for example, active material and pores) can be physically measured by nitrogen adsorption, for example using the Brunauer-Emmett-Teller (BET) method ;

- a tortuosity of ionic diffusion of type I can be physically measured by a method called "polarization-interrupt" (or "restricted diffusion") ;

- a tortuosity of ionic diffusion of type II can be measured experimentally using an impedance method on symmetric cells ("Electrical Impedance Spectroscopy on Symmetric cells").

These physical properties are provided by means of non-limitative example of physical properties that may be used within the invention. According to various embodiments of the invention, one or a plurality of such properties may be calculated and measured. Any combination of one or more of the above mentioned properties may be used.

The physical measurement can be obtained in different ways. For example, a physical measurement can be performed on the electrochemical cell unit during the execution of the method. Alternatively, a physical measurement that has been previously performed can be retrieved. For example, a distribution of the size of particles of active material can be measured on the powder of active material before the manufacturing of the electrochemical cell unit.

The method 500 further comprises a step 590 of calculating one or more difference between said one or more physical measurements and said calculated values of said one or more physical property.

For example, for each property $i$ that has been measured and calculated, a difference or error $E_i$ can be calculated between two values.

For some properties, a plurality of values can be obtained. For example, the properties relative to the distribution of the sizes of pores or particles, the sizes of pores or particles can be discretized according to the same discrete intervals, thus allowing to calculate a value of property for each discrete interval. In such case a difference associated with the property can be calculated using a weighted average of the different values, for example a weighted average of all the values of size of particles or pores in each discretized interval, for example through the formula below:

$$E_i = \sum_{j=1}^{N_i} \omega_{i,j} \left| \frac{p_{i,j}^{\text{calc}} - p_{i,j}^{\text{exp}}}{p_{i,j}^{\text{exp}}} \right|$$

*Equation 1*

Where:

- $E_i$ is the difference, or error, associated with the property $i$ ;

- $N_i$ represents the total number of values associated with the property $i$ ;

- $j$ is the index of each value of the property $i$, for example each discretized interval for the distribution of the sizes of particles or pores ;

- $\omega_{i,j}$ is a weight associated to the value of index $j$, with $\sum_{j=1}^{N} \omega_{i,j} = 1$ ;

- $p_{i,j}^{\text{calc}}$ is the calculated value of index $j$ ;

- $p_{i,j}^{\text{exp}}$ is the physically measured value of index $j$.

The weighted average in Equation 1 is provided by means of example only of a calculation of distance between two distributions of values. Such a difference may be calculated in different ways; For example, a surface difference between the two distributions may be calculated, using for example an integral of type L1 norm or L2 norm.

The method 500 further comprises a step 5000 of verifying if the one or more difference exceeds a threshold. For example, a difference $E_i$ associated with the property $i$ can be compared with a threshold $\varepsilon_i$ , the difference exceeding the threshold if $E_i > \varepsilon_i$.

The threshold $\varepsilon_i$ represents for example an acceptable difference between the calculated and measured values. Thus, a difference below the threshold means that the image is consistent with the measured physical properties.

The threshold $\varepsilon_i$ may be defined in different ways. It may for example be defined by a user as a threshold representative of an absence of significant difference between measured and calculated values.

The threshold $\varepsilon_i$ may also correspond to an uncertainty of measurement of the property $i$. In cases

where $\varepsilon_i$ corresponds to an uncertainty of measurement of the property $i$, the fulfillment of the condition $E_i > \varepsilon_i$ means that the calculated value of the physical property falls outside of the confidence range of the measurement.

In some cases, an additional uncertainty can be added to the uncertainty of measurement of the property $i$. For example, if a distribution of the sizes of the particles of active material is measured on the powder of active material before the manufacturing of the electrochemical cell unit (for example before the manufacturing of the electrode), the distribution of the sizes of the particles of active material can be modified during the manufacturing process, notably due to the deformations caused by the mechanical stress of the manufacturing process. In such a case, a calculated value may accurately represent the distribution of the sizes of the particles of active material of the manufactured electrochemical cell unit (for example before the manufacturing of the electrode), but fall outside the confidence of measurement of the distribution of particles of active material performed on the powder of active material before the manufacturing process. Therefore, the threshold $\varepsilon_i$ can be equal to the addition of the uncertainty of measurement and an additional uncertainty.

In some cases , one of the measured and calculated properties is the specific area, that represents the surface of contact between different components (for example, the surface of contact between active material and pores). The calculation of specific area however causes an issue related to the resolution of the calculation of the specific area: the higher the resolution, the higher will the calculated area will be, because more detailed surfaces can be taken into account.

A similar issue can arise during the simulation, because the surface of contact will be taken into account during the simulation, and the higher the resolution of the simulation, the higher the surface of contact will be. Meanwhile, the resolution of the simulation is here the resolution of the 3D image. Thus, it is possible to determine a ratio between the measured specific area, and the specific area calculated in the resolution of the image. The determined ratio can then be input to the simulation, in order to take into account the ratio between the measured and the calculated specific area. This allows reconciling, during the simulation, the specific area used for the simulation, and measured, so that the physical accuracy of the simulation is improved.

When a plurality of physical properties are considered, a comparison between the difference and the threshold can be performed for each property.

If the difference is below a threshold (or all the differences relative to all the property below the corresponding threshold), the method terminates, and the 3D image can be outputted. At this stage, it is demonstrated that the 3D image is compliant with the measurements regarding all the physical properties that are considered.

If at step 5000 is detected that the one or more difference exceeds a threshold, the method further comprises a step 5100 of modifying one or more of said 3D image and one or more parameter of the preceding steps.

Stated otherwise, in such case at step 5100 the image can be modified and/or parameters of preceding steps, such as for example parameters of segmentation at step 550, the parameters of image cleaning at step 560, or the parameters of calculation of the physical property at step 570.

The step 5100 may for example comprise one or more of the modifications listed below.

The parameters of some of the steps of the method may be modified. For example, the parameters of the data cleaning methods applied to the 3D image at step 560, and/or the parameters of segmenting said labelled 3D image into elementary particles of active material at step 550 may be modified.

The image itself may also be modified. For example, if the proportion of the different components as calculated in the image do not match the proportion of components that are measured, the image can be modified so that the proportions of the different components match the measured proportions. For example, if a measurement indicates that there is 50% of active material and 50% of void, but the calculations indicate that there is 55% of active material and 45% of pores, the input image can be corrected so that the proportion is 50% / 50% as in the measurements. The modification can be performed for example by setting as pore voxels some active material voxels that are neighbors of pore voxels. Of course, this is provided by means of illustrative and non limitative embodiment only, and an image can be modified in many different ways so that the proportions of the different components in the image match a measured proportion.

The parameters can be modified in different ways. For example, a set of possible parameters can be tested until the differences $E_i$ fall below the threshold $\varepsilon_i$ for all the physical properties.

The size of a window of the 3D image used for calculating said values of said one or more physical property at step 570 can be increased. Indeed, the calculation of the physical property is expected to be more reliable over a large window.

A further 3D image may be acquired at a location of the electrochemical cell unit different from the 3D image. Indeed, a discrepancy between the measured and calculated physical properties may come from the fact that the 3D image has been acquired at a location which is not representative of the electrochemical cell unit as a whole. A further 3D image may thus be acquired at a different location, and a new iteration could be restarted from step 530 on the ground of the further 3D image.

The 3D image can also be replaced by an image generated by a generative machine learning engine that exhibits values of said one or more physical property similar to the measurements. Then a new iteration could be restarted from step 530 on the ground of the 3D image generated by the generative machine learning engine.

For example, generative machine learning engines that may be used to generate 3D images comprise:

- generative machine learning engines based on neural networks such as GAN3D or Variational Auto Encoders (VAE) may be used to generate 3D images ;

- generative machine learning engine using stochastic geometry or « Discrete Element Method » (DEM) simulations ;

- generative machine learning engine that use both stochastic geometry or « Discrete Element Method » (DEM) simulations, and neural networks to render the generated images more realistic.

The step 5100 therefore allows modifying the conditions of calculation (either the input image and/or the parameters of calculation), so that the distance calculated at step 590 can be decreased. A plurality of successive iterations can be performed with different modifications, until all the distances calculated at step 590 fall below the thresholds.

Is it in general desirable to use when possible a real image rather than an artificial image. Therefore, the modifications can be performed in the order of priority listed below:

1) modifications of the parameters of steps 550 or 560 ;

2) increasing a size of a window of the 3D image used at step 570 ;

3) acquiring a further 3D image at a different location of the electrochemical cell unit;

4) replacing the 3D image by an image generated by a generative machine learning engine.

If a modification is not sufficient, a modification of subsequent order of priority can be executed in subsequent iterations. For example, if all the possible modifications of parameters at step 550 and 560 have been tested unsuccessfully, the size of the window at step 570 can be increased, then if the output is still not successful a further 3D image can be acquired, etc.

Depending upon the elements that have been modified, the method 500 can return to a previous step for a subsequent iteration of calculation. For example:

- if the image is modified, the subsequent iteration can start at step 530, and the steps 530 to 5000 are repeated in the subsequent iteration ;

- if the parameters of step 550 are modified but not the image, the subsequent iteration can start at step 550, and the steps 550 to 5000 are repeated in the subsequent iteration ;

- if the parameters of step 560 are modified, but neither the image nor the parameters of step 550 the subsequent iteration can start at step 560, and the steps 560 to 5000 are repeated in the subsequent iteration ;

- if the parameters of step 570 are modified, but neither the image nor the parameters of step 550 and 560 the subsequent iteration can start at step 570, and the steps 570 to 5000 are repeated in the subsequent iteration.

The step 580 of performing the physical measurement can be repeated in the subsequent iteration.

Alternatively, the measured values of the one or more physical properties can be reused between the iterations. In such case, there is no need of repeating the step 580 in the subsequent iteration, and only the steps 530, 540, 550, 560, 570, 590 and 5000 may be repeated in the subsequent iteration.

Thus, when the calculated and measured physical properties are dissimilar, the image or some parameters of the method can be modified, and some or all the steps 530 to 5000 are repeated, until the measured and calculated physical properties are consistent.

The method 500 therefore produces a microscopic image of an electrochemical cell unit while ensuring that the microscopic representation is consistent with the physical properties of the electrochemical cell unit.

It is worth noting that the order in which the steps of the method 500 are shown in the method 500 is non limitative: some steps may be performed in parallel or in a different order. For example,

- the step 580 of performing one or more physical measurements of said one or more physical property of the electrochemical cell unit is not necessarily performed after step 570, but could be performed at any time between the start of the method and execution of the step 590, possibly in parallel with other steps. For example, the steps 520 and 580 may be performed simultaneously ;

- the steps 530 and 540 can be executed simultaneously, if the values of the pixels of each slice are directly written in the corresponding voxel ;

- the step 560 of data cleaning can be performed at the end of the method, for example if the step 5000 is negative. In such case the physical properties are calculated on the 3D image before image cleaning ;

- when the image is modified at step 5100, the step 580 could be repeated in the subsequent iteration of steps 530-590, or skipped, the preceding measured value being reused.

It is now referred to figure 10.

The method 1000 is an example of a method of simulation of an electrochemical cell unit according to a number of embodiments.

The method 1000 comprises all the steps of the method 500 represented in figure 5;

In addition, the method 1000 comprises an optional step 1010 of using a generative machine learning engine to extend the size of said 3D image to a full size of the electrochemical cell unit based on the calculated values of said one or more physical properties.

The step 1010 thus consists in using a generative machine learning, such as for example a VAE to extend the size of the 3D image so that it is representative of the whole electrochemical cell unit, while complying with the calculated values of the one or more physical properties. Stated otherwise, the generative machine learning engine may have been previously trained to generate 3D images having certain physical properties, and can thus be used to extend the 3D image to represent a realistic view of the whole electrochemical cell unit, while requiring only a 3D measurement on a small part of the electrochemical cell unit.

The method 1000 further comprises a step 1020 of feeding said segmented 3D image to a micro-scale simulator of a battery comprising the electrochemical cell unit.

The micro-scale simulator can thus simulate the battery based on images of the electrochemical cell units that are consistent with the measured physical properties of the electrochemical cell unit. The reliability of the simulation is therefore increased.

This can lead to improvements of the design and use of batteries.

For example, a plurality of charge cycles of a battery can be simulated in a physically accurate manner. Therefore, the optimal charge cycles can be selected and used for a battery. Therefore, the efficiency and lifetime of a battery can be increased.

More specifically, certain parameters and performance metrics of the battery, such as the temperature, charging speed, aging of the battery can be measured in real conditions of charging cycles (e.g charge / discharge / relaxation of the battery). Then charging cycle and the resulting performance metrics of the battery can be simulated under new conditions (e;g different conditions of temperature, humidity, charging time, etc.), so that the optimal conditions can be selected and subsequently used.

More generally, performing physically accurate simulations of a battery allows optimizing the management of the battery.

The method can also be used to evaluate the uncertainty/precision of the parameters of the input model of the simulation, so that the uncertainty/precision of the output of the simulation can also be assessed.

Physically realistic microscale simulations can also lead to improved design of the batteries. Indeed, the operation of an existing battery can be simulated at nanoscale. Therefore, the simulation can provide an in-depth understanding and feedback relative to the physical behavior of the batteries, and the design of the batteries can be improved based upon the results of the simulation. For example, a modified design of the battery can be obtained by modifying certain parameters of the input model of the simulation (e.g modification of the thickness of an electrode, the composition of an electrode, the porosity of an electrode, etc.), and then tested, so that an optimal design can be identified.

The 3D images generated by a method according to the invention may also be input to different processes. For example, they can be displayed to users for analyzing the structure of an electrochemical cell unit.

The 3D images generated by a method according to the invention can also be associated to the calculated one or more physical properties to enrich a training database of a generative machine learning engine.

Such training database can then be used to train a generative machine learning engine to generate segmented 3D images of electrochemical cell units based on input values of said one or more physical properties.

Such a generative machine learning engine can thus be used to extend the size of 3D images for example at step 1010, or generate 3D images that can be fed to a micro-scale simulator.

Thus, the generative machine learning engine is able to generate physically realistic images of electrochemical cell unit having desired properties, without having to physically create the electrochemical cell unit. This greatly improves the simulation capabilities, by allowing a much more efficient simulation of new electrochemical cell units with varying physical properties.

It is now referred to figure 11.

Figure 11 is an example of steps of calculating a window size for obtaining 3D images in a number of embodiments.

The figure 11 more specifically represents an embodiment of the steps 110 or 510.

In the example of figure 11, the step 110 or 510 first comprises a sub-step 1110 of acquiring a 2D grayscale image of the electrochemical cell unit.

The step 110 or 510 then comprises, for each candidate window size of a plurality of candidate window sizes:

- a sub-step 1120 of calculating a mean gray value for a plurality of windows of the candidate window size at different locations of the 2D image. The mean gray value represents for example the median value of the gray intensities of all pixels of the window ;

- a sub-step 1130 of calculating a variance of the mean gray values over the plurality of windows of the candidate window size.

The steps 1120 and 1130 can be repeated for each candidate window size.

The step 110 or 510 then comprises a step 1140 of selecting the smallest candidate window size having a variance below a variance threshold.

The variance threshold can be defined to ensure that the windows of the candidate size are all sufficiently consistent. Thus, the steps 1110 to 1140 ensures that the 3D image will be fairly representative of the whole electrochemical cell unit.

Meanwhile, the smallest window size that is considered as satisfactory is selected, in order to limit the inconvenience of the 3D imaging. For example, the cost and damages caused by the 3D imaging are lowered.

The selected candidate window size can thus be used for obtaining the 3D image at step 120 or 520.

It is now referred to figure 12.

The figure 12 represents an example of windows of a candidate window size in a number of embodiments.

The image Img12 represents a 2D image of an electrochemical cell unit. It is shown that different levels of gray represented in the image.

The image Box12 represents a plurality of windows of a given candidate window size. A mean gray value is computed for each of the windows, then the variance of all the mean gray values of the windows of the given size is calculated.

It is now referred to figure 13.

Figure 13 represents an example of variances of mean gray values depending upon candidate window sizes in a number of embodiments.

The graph Var13 represents the variance of the mean gray value depending upon the window sizes, according to different methods of calculation of the variance.

The size of the candidate windows is provided in the horizontal axis (increasing values from left to right), and the variance is provided in the vertical axis (increasing values from bottom to top).

It is shown that the variance generally decreases with the candidate window size, whatever the calculation method. A variance threshold VarThr13 can thus be defined to select the most appropriate candidate window size at step 1140.

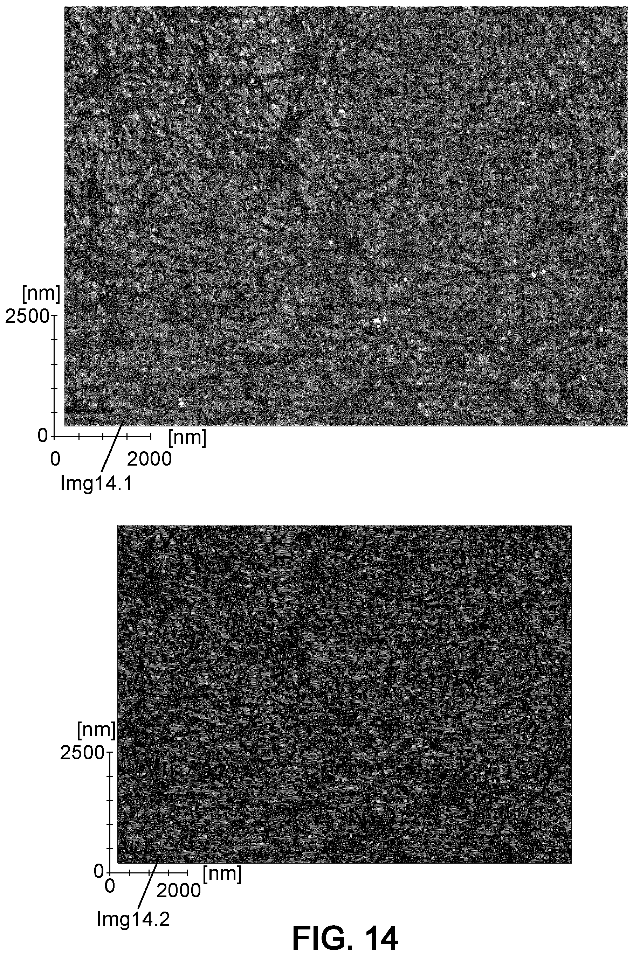

It is now referred to figure 14.

As mentioned above, the invention is not restricted to images of electrodes, but may be applied to other kinds of electrochemical cell units. For example, the image 14 represents an example where the invention is applied to images of a separator of electrochemical cell.

The image Img14.1 represents a 2D slice of an 3D image of a separator.

In this example:

- the separator is formed of membrane material, mostly polyethylene, which is not a conductive material;

- the physical properties that are measured and calculated are the porosity and the tortuosity ;

- the labels for the segmentation are membrane material and pores.

Thus, the porosity and tortuosity are measured on the separator.

In addition, the pixels of the 2D slices of the image of the separator are labelled either as membrane material or pores. Then, the particles of membrane materials are segmented in 3D.

The image 14.2 represents the output of the labelling, where the dark pixel represent pores, and the light pixel represent separator material.

As in the other examples, the porosity and tortuosity can be calculated from the segmented images of the separator, and compared to the measured porosity and tortuosity.

Then, if the calculated porosity and tortuosity comply with the measured porosity and tortuosity, the images of the separator can be fed to a microscale simulation of a battery comprising the separator.

This example demonstrates that the invention is not restricted to electrodes, and can be applied to any kind of electrochemical cell unit. The skilled person can selected the relevant physical property for a given electrochemical cell unit and a given application.

This disclosure is not limited to the computer-implemented methods, computer program and computing devices described here, which are only examples. The invention encompasses every alternative that a person skilled in the art would envisage when reading this text.

**Claims**

1. A computer-implemented method (500; 1000) comprising:

    - obtaining (520), from a 3D imaging measurement, a 3D image of at least a portion of an electrochemical cell unit, where the intensity of each voxel depends upon an electrochemical cell unit component that the voxel contains ;
    - using (530) a trained supervised machine learning engine to associate, based on intensities of voxels of the 3D image, each of said voxels of the 3D image to labels representative of electrochemical cell unit components, said labels comprising at least a label representative of material, and a label representative of pores ;
    - segmenting (550) said labelled 3D image into elementary particles of material ;
    - calculating (570), from said segmented 3D image, values of one or more physical property of the electrochemical cell unit;
    - obtaining (580) one or more physical measurements of said one or more physical property of the electrochemical cell unit ;
    - calculating (590) one or more difference between said one or more physical measurements and said calculated values of said one or more physical property ;
    - if said one or more difference exceeds a threshold (5000), modifying one or more of said 3D image (5100) and one or more parameter of the preceding steps.

2. The computer-implemented method of claim 1, wherein using a trained supervised machine learning engine to associate, based on intensities of voxels of the 3D image, each of said voxels of the 3D image to said labels representative of electrochemical cell unit components comprises:

    ∘ using (531) said trained supervised machine learning engine to associate, based on intensities of pixels of a plurality of 2D slices of the 3D image, each of said pixels of said plurality of 2D slices to said labels representative of electrochemical cell unit components ;
    ∘ associating (540) each of said labels representative of electrochemical cell unit components to the corresponding voxel of said 3D image to obtain a labelled 3D image.

3. The computer-implemented method of any of the preceding claims, wherein said one or more physical property is selected in a group comprising one or more of:

    - a volumic fraction of each electrochemical cell unit component,
    - a distribution of the sizes of particles of material ;
    - a distribution of the sizes of pores ;
    - a surface of contact between at least two electrochemical cell unit components ;
    - a tortuosity of the electrochemical cell unit;
    - a pore network;
    - a porosity gradient;
    - a surface roughness.

4. The computer-implemented method of any of the preceding claims, wherein :

    - said calculating, from said segmented 3D image, one or more physical property of the electrochemical cell unit comprises:

        ∘ calculating values of said one or more physical property of the electrochemical cell unit for a plurality of window sizes, and for a plurality of distinct windows of each size ;
◦ calculating a variance of the one or more properties for each window size ;
◦ determining the smallest window size for which the variance is below a predefined threshold ;
◦ calculating values of said one or more physical property of the electrochemical cell unit using a window of said determined smallest window size for which the variance is below a predefined threshold.

5. The computer-implemented method of any of the preceding claims, further comprising an image cleaning step (560) comprising one or more of:

   - deleting artifacts in the segmented 3D image ;
   - smoothing interfaces between voxels belonging to different labels ;
   - fusing a plurality of particles ; and
   - detecting an isolated particle (IsPart9), and:

      ◦ calculating the volume of the particle, and the distance between the particle and its nearest particle neighbor (ConPart19) ;
      ◦ deleting said isolated particle if at least one condition is fulfilled in a group of conditions comprising one or more of :

         ▪ the volume is below a predefined volume threshold, and
         ▪ the distance higher than a predefined distance threshold;

      ◦ otherwise, inserting between the isolated particle and its nearest particle neighbor a further particle (FurPart9) whose diameter is equal to the distance between the isolated particle and its nearest particle neighbor.

6. The computer-implemented method any of the preceding claims, wherein modifying (5100) one or more of said 3D image and one or more parameter of the preceding steps comprises performing one or more of:

   ◦ modifying parameters of data cleaning methods applied to the 3D image ;
   ◦ modifying parameters of segmenting said labelled 3D image into elementary particles of material ;
   ◦ increasing a size of a window of the 3D image used for calculating said values of said one or more physical property ;
   ◦ acquiring a further 3D image at a location of the electrochemical cell unit different from the 3D image ;

◦ replacing said 3D image by an image generated by a generative machine learning engine that exhibits values of said one or more physical property similar to the measurements.

7. The computer-implemented method (1000) of any of the preceding claims, further comprising feeding (1020) said segmented 3D image to a micro-scale simulator of a battery comprising the electrochemical cell unit.

8. The computer-implemented method of the preceding claims comprising, prior to feeding said segmented 3D image to the micro-scale simulator, using (1010) a generative machine learning engine to extend the size of said 3D image to a full size of the electrochemical cell unit based on the calculated values of said one or more physical properties.

9. The computer-implemented method of one of claims 1 to 6, wherein:

   - said segmented 3D image is associated with said calculated one or more physical properties to enrich a training database of a generative machine learning engine ;
   - said computer-implemented method further comprises:

      ◦ training said generative machine learning engine using said training database to generate segmented 3D images of electrochemical cell units based on input values of said one or more physical properties ;
      ◦ feeding said segmented 3D images generated by the machine learning engine to a micro-scale simulator of a battery comprising the electrochemical cell unit.

10. A computer-implemented method comprising:

   - obtaining (120) a 3D image of at least a portion of an electrochemical cell unit, where the intensity of each voxel depends upon an electrochemical cell unit component that the voxel contains ;
   - extracting (130) a 2D slice (Slc2; Slc3) from said 3D image ;
   - displaying (140) said 2D slice ;
   - receiving (150), through one or more man-machine interface, labels representative of electrochemical cell unit components associated to pixels of said 2D slice ;
   - segmenting (160) said 2D slice into a plurality of pixel tiles (Til31; Til32; Til33; Til34; Til35) associated to received labels ;
   - creating (170) additional pixel tiles (AddTil4) associated with additional labels by applying one or more geometrical transformations to said one or more segmented pixel tiles and the associated received labels ;

- enriching (180) a training database with said segmented pixel tiles associated with the received labels, and said additional pixel tiles associated with the additional labels ;

- using (190) said training database to train a supervised machine learning engine to associate, based on intensities of pixels of 2D images, said pixels of 2D images to labels representative of electrochemical cell unit components.

11. The computer-implemented method of claim 10, wherein said one or more geometrical transformations comprise one or more of flipping, rotating and rescaling.

12. The computer-implemented method of any one of claims 1 to 11, wherein said 3D image is one or more of :

  ○ a Nano-computed tomography image ;
  ○ a Confocal Microscopy image;
  ○ a Serial Block-Face Scanning Electron Microscopy (SBF-SEM) image;
  ○ a X-ray Microtomography (Micro-CT) image;
  ○ a Focused Ion Beam-Scanning Electron Microscopy (FIB-SEM) image;
  ○ a Plasma FIB-SEM image;
  ○ a Time-Of-Flight Secondary Ion Mass Spectrometry (Tof-SIMS) image;
  ○ a Scanning Electron Microscopy (SEM) image ;
  ○ a Transmission Electron Microscopy (TEM) image.

13. The method of any one of claims 1 to 12, wherein said supervised machine learning engine is a U-Net convolutive neural network.

14. The method of any one of the preceding claims, wherein:

  - said method comprising, prior to obtaining the 3D image of said at least the portion of the electrochemical cell unit, a preliminary step (110; 510) steps of calculating a window size for obtaining 3D the image comprising:

    ○ acquiring (1110) a greyscale 2D image of the electrochemical cell unit;
    ○ for each candidate window size of a plurality of candidate window sizes:

      ▪ calculating (1120) a mean gray value for a plurality of windows of the candidate window size at different locations of the 2D image ;

      ▪ calculating (1130) a variance of the mean gray values over the plurality of windows of the candidate window size ;

    ○ selecting (1140) the smallest candidate window size having a variance below a variance threshold ;

  - obtaining the 3D image of said at least the portion of the electrochemical cell unit is performed according to said selected candidate window size.

15. Computer software comprising instructions to implement at least a part of a method according to one of claims 1 to 14 when the software is executed by a processor.

16. Computer-readable non-transient recording medium on which a software is registered to implement a method according to one of claims 1 to 14 when the software is executed by a processor.

```
┌ ─ ─ ─ ─ ─ ─ ─ ─ ─ ─ ─ ─ ─ ─ ─ ─ ─ ┐
  Select representative portion       ──── 110
└ ─ ─ ─ ─ ─ ─ ─ ─ ─ ─ ─ ─ ─ ─ ─ ─ ─ ┘
                  │
                  ▼
┌───────────────────────────────────┐
│          Obtain 3d image          │ ──── 120
└───────────────────────────────────┘
                  │
                  ▼
┌───────────────────────────────────┐
│          Extract 2D slice         │ ──── 130
└───────────────────────────────────┘
                  │
                  ▼
┌───────────────────────────────────┐
│          Display 2D slice         │ ──── 140
└───────────────────────────────────┘
                  │
                  ▼
┌───────────────────────────────────┐
│           Receive labels          │ ──── 150
└───────────────────────────────────┘
                  │
                  ▼
┌───────────────────────────────────┐
│           Segment labels          │ ──── 160
└───────────────────────────────────┘
                  │
                  ▼
┌───────────────────────────────────┐
│        Create additionnal tiles   │ ──── 170
└───────────────────────────────────┘
                  │
                  ▼
┌───────────────────────────────────┐
│       Enrich training database    │ ──── 180
└───────────────────────────────────┘
                  │
                  ▼
┌───────────────────────────────────┐
│           Train ML engine         │ ──── 190
└───────────────────────────────────┘
```

# FIG. 1

100

Slc2 — Lbl2

**FIG. 2**

Til31  Til32  Til33

Til34  Til35

**FIG. 3**

AddTil4

**FIG. 4**

510 — ┊ Select representative portion ┊

520 — Obtain 3D image

530

531 — Associate Labels to pixels

540 — Associate Labels to Voxels

550 — Segment particles

560 — ┊ Image cleaning ┊

570 — Calculate physical property

580 — Measure physical property

590 — Calculate difference $E_i$

5100

Modify Image and/or parameter

5000 — $E_i > \epsilon_i\,?$ — Yes

No

End

500

**FIG. 5**

**FIG. 6**

**FIG. 7**

**FIG. 8**

**FIG. 9**

510 — Select representative portion

520 — Obtain 3D image

530 — Associate Labels to pixels

540 — Associate Labels to Voxels

550 — Segment particles

560 — Image cleaning

570 — Calculate physical property

580 — Measure physical property

590 — Calculate difference $E_i$

5100 — Modify Image and/or parameter

5000 — $E_i > \epsilon_i$ ?  Yes

Non

1010 — Extend image size

1020 — Feed to simulator

1000

**FIG. 10**

```
1110 ──    Acquiring 2D image

1120 ──    Calculating mean gray value

1130 ──    Calculating mean gray variance

1140 ──    Selecting candidate window size
```

510; 1100

# FIG. 11

Img12

Box12

Export @ 25nm (50k x 40k pixels)
Field of view: 1.25mm x 1.0mm
Porosity: 2.3%

## FIG. 12

Var13

RSD - Relative Standard Deviation

- ·—·—· RSD grey (100 - 2x)
- —— RSD equalized (100 - 2x)
- ------ RSD entropy (100 - 2x)
- —— RSD gradient (100 - 2x)
- ▪▪▪▪▪ RSD hessian (100 - 2x)
- ·—·—· RSD binarization (100 - 2x)
- —— RSD hist_k3 (100 - 2x)
- ------ RSD hist_k4 (100 - 2x)

VarThr13

Both side length (μm)

## FIG. 13

FIG. 14

Europäisches
Patentamt

European
Patent Office

Office européen
des brevets

# EUROPEAN SEARCH REPORT

**Application Number**

EP 23 30 7266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMON MÜLLER: "Deep learning-based segmentation of lithium-ion battery microstructures enhanced by artificially generated electrodes", NATURE COMMUNICATIONS, vol. 12, no. 1, 27 October 2021 (2021-10-27), pages 1-12, XP093164326, UK ISSN: 2041-1723, DOI: 10.1038/s41467-021-26480-9 * abstract * * page 1 - page 10 * * figures 1-7 * | 1-16 | INV. G06V10/82 G06T7/00 G06T7/11 G06V20/52 G06V20/69 G06V10/98 |
| X | Simon Müller: "Deep Learning-based Segmentation of Lithium-Ion Battery Microstructures enhanced by artificially generated Electrodes Supplementary Information", , 27 October 2021 (2021-10-27), pages 1-14, XP093164352, Retrieved from the Internet: URL:https://www.ncbi.nlm.nih.gov/pmc/articles/PMC8551326/bin/41467_2021_26480_MOESM1_ESM.pdf [retrieved on 2024-05-20] * abstract * * page 1 - page 13 * | 1-16 | TECHNICAL FIELDS SEARCHED (IPC) G06V G06T |

-/--

The present search report has been drawn up for all claims

| Place of search | Date of completion of the search | Examiner |
|---|---|---|
| The Hague | 22 May 2024 | Karwe, Markus |

EPO FORM 1503 03.82 (P04C01)

page 1 of 2

Europäisches
Patentamt
European
Patent Office
Office européen
des brevets

**EUROPEAN SEARCH REPORT**

Application Number

EP 23 30 7266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREA GAYON-LOMBARDO ET AL: "Stochastic reconstruction of periodic, three-dimensional multi-phase electrode microstructures using generative adversarial networks", ARXIV.ORG, CORNELL UNIVERSITY LIBRARY, 201 OLIN LIBRARY CORNELL UNIVERSITY ITHACA, NY 14853, 17 February 2020 (2020-02-17), XP081628258, * abstract * * page 1 - page 10 * * figure 1 * ----- | 1-16 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 22 May 2024 | Karwe, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- U-net: Convolutional networks for biomedical image segmentation. **RONNEBERGER, O.** ; **FISCHER, P.** ; **BROX, T.** Medical Image Computing and Computer-Assisted Intervention-MICCAI 2015: 18th International Conference. Springer International Publishing, 2015, vol. 18, 234-241
- **MÜNCH, B.** ; **HOLZER, L.** Contradicting geometrical concepts in pore size analysis attained with electron microscopy and mercury intrusion.. *Journal of the American Ceramic Society*, 2008, vol. 91 (12), 4059-4067
- **COOPER, S. J.** ; **BERTEI, A.** ; **SHEARING, P. R.** ; **KILNER, J. A.** ; **BRANDON, N. P.** TauFactor: An open-source application for calculating tortuosity factors from tomographic data.. *SoftwareX*, 2016, vol. 5, 203-210

- **NGUYEN, T. T.** ; **DEMORTIÈRE, A.** ; **FLEUTOT, B.** ; **DELOBEL, B.** ; **DELACOURT, C.** ; **COOPER, S. J.** The electrochemical cell unit tortuosity factor: why the conventional tortuosity factor is not well suited for quantifying transport in porous Li-ion battery electrochemical cell units and what to use instead.. *Computational Materials,*, 2020, vol. 6 (1), 123
- **SHODIEV, A.** ; **PRIMO, E. N.** ; **CHOUCHANE, M.** ; **LOMBARDO, T.** ; **NGANDJONG, A. C.** ; **RUCCI, A.** ; **FRANCO, A. A.** 4D-resolved physical model for Electrochemical Impedance Spectroscopy of Li (Ni1-x-yMnxCoy) O2-based cathodes in symmetric cells: Consequences in tortuosity calculations.. *Journal of Power Sources*, 2020, vol. 454, 227871